# FASCICULE DE BREVET EUROPEEN

(11) **EP 3 983 211 B1**
(45) Date de publication et mention de la délivrance du brevet: **02.08.2023**
(21) Numéro de dépôt: 20742805.3
(22) Date de dépôt: 12.06.2020
(51) Int. Cl.: B29D 30/06

(54) **PROCÉDÉ DE FABRICATION D'UNE COUCHE ÉTANCHE ENTRANT DANS LA COMPOSITION D'UN PNEUMATIQUE ET COUCHE ÉTANCHE**
VERFAHREN ZUR HERSTELLUNG EINER LUFTDICHTEN SCHICHT ZUR VERWENDUNG IN DER ZUSAMMENSETZUNG EINES REIFENS UND LUFTDICHTE SCHICHT
METHOD FOR MANUFACTURING AN AIRTIGHT LAYER USED IN THE COMPOSITION OF A TYRE AND AIRTIGHT LAYER

(30) Priorité: 14.06.2019 FR 1906358
(43) Date de publication de la demande: 20.04.2022
(73) Titulaire: COMPAGNIE GENERALE DES ETABLISSEMENTS MICHELIN, 63040 Clermont-Ferrand (FR)
(72) Inventeur: PIALOT, Frédéric, 63040 CLERMONT-FERRAND CEDEX 9 (FR); MERINO LOPEZ, José, 63040 CLERMONT-FERRAND CEDEX 9 (FR)
(74) Mandataire: Redouté, Gilles Pierre
(86) Numéro de dépôt international: PCT/FR2020/051001
(87) Numéro de publication internationale: WO 2020/249910

(56) Documents cités:
- DE-T5-112014 005 976
- FR-A1- 3 045 637

## Description

L'invention se situe dans le domaine de la fabrication des pneumatiques et concerne plus particulièrement un procédé de fabrication d'une couche étanche entrant dans la composition d'un pneumatique.

Un pneumatique est partagé en trois zones distinctes comprenant un sommet ceinturant circonférentiellement le pneumatique, deux bourrelets permettant notamment une liaison étanche entre le pneumatique et la jante d'une roue sur laquelle le pneumatique est monté, et deux flancs reliant radialement chaque bourrelet au sommet.

Le pneumatique doit satisfaire à des contraintes d'étanchéité afin de contenir les gaz sous pression dans la chambre formée par la surface intérieure du pneumatique et la roue.

La fuite des gaz sous pression peut s'effectuer par diffusion des gaz au travers du pneumatique.

Par ailleurs, la diffusion des gaz et, plus particulièrement, de l'oxygène au travers du pneumatique provoque une dégradation prématurée, notamment par oxydation, des éléments entrant dans la composition du pneumatique.

On cherche donc à réduire la perméabilité du pneumatique aux gaz et, plus particulièrement, à l'oxygène.

On connaît notamment des composés élastomériques à base de caoutchouc butyl sous forme de nappe qu'on dispose sur la surface intérieure du pneumatique de manière à former une couche étanche.

Toutefois, un inconvénient bien connu des compositions à base de caoutchouc ou élastomère butyl est qu'elles présentent des pertes hystérétiques importantes, qui plus est sur un spectre large de température.

Diminuer l'hystérèse de ces couches d'étanchéité et donc in fine la consommation de carburant des véhicules automobiles, est un objectif général auquel se heurte la technologie actuelle.

De nombreuses solutions ont été recherchées pour tenter de diminuer l'hystérèse des couches étanches tout en conservant une bonne étanchéité.

Le document US6136123 divulgue un objet pneumatique pourvu d'une couche étanche aux gaz de gonflage, comportant une composition élastomère diénique et un film thermoplastique à base de résine thermoplastique. Comparativement à un caoutchouc butyl, le film thermoplastique présente l'avantage majeur, en raison de sa nature thermoplastique, de pouvoir être travaillé tel quel à l'état fondu (liquide), et par conséquent d'offrir une possibilité de mise en oeuvre simplifiée, de diminuer l'hystérèse et de maintenir une bonne étanchéité par rapport à des compositions à base de caoutchouc butyl.

La demande WO2008145277 décrit quant à elle un objet pneumatique pourvu d'une couche élastomère étanche aux gaz de gonflage, caractérisé en ce que ladite couche élastomère comporte au moins un élastomère thermoplastique. Ce pneumatique, comparativement à un pneumatique comprenant une couche étanche en caoutchouc butyl, présente une hystérèse réduite tout en conservant de bonnes propriétés d'étanchéité.

Toutefois, il demeure intéressant à ce jour de trouver des solutions permettant de conférer aux couches intérieures de bonnes propriétés d'étanchéité et de diminution de l'hystérèse par rapport à des compositions à base de caoutchouc butyl, tout en conservant des propriétés de déformabilité satisfaisantes.

En effet, réaliser une structure qui soit à la fois déformable et étanche s'avère particulièrement complexe. Les élastomères utilisés pour leurs propriétés de déformabilité présentent en générale une faible étanchéité. A contrario, les thermoplastiques présentent une étanchéité élevée, mais une déformabilité si faible qu'elle rend leur utilisation difficile dans le domaine des pneumatiques en raison des contraintes de fabrication et d'utilisation.

La demande FR3045637, au nom des demanderesses, tente d'apporter une réponse au problème de déformabilité des thermoplastiques en proposant une couche étanche composite qui comprend une matrice élastomérique, et des fragments de films réalisés dans un matériau thermoplastique peu perméable aux gaz, et de surface limitée à au plus 10 cm². Les fragments sont noyés dans la matrice élastomérique tout en étant disposés parallèlement à la surface de la couche, de manière à se chevaucher entre eux et à couvrir autant que possible la surface de la couche.

La disposition d'une multitude de fragments de films de surface limitée présente l'avantage d'éviter la formation de zones non couvertes par les films lors des phases d'allongement de la couche, grâce au glissement relatif des films qui se chevauchent.

Toutefois, les films ainsi disposés ne forment pas une barrière apte à réduire ou stopper efficacement la diffusion des gaz au travers du pneumatique.

Enfin, l'opération consistant à disposer une multitude de fragments de film dans une matrice élastomérique est complexe et a pour conséquence d'augmenter le cout de fabrication de la couche étanche composite.

Par conséquent, un objectif de l'invention est de proposer une couche étanche entrant dans la fabrication d'un pneumatique et offrant une étanchéité améliorée, tout en lui conférant une forte déformabilité et une faible hystérèse.

Un autre objectif de l'invention est de proposer une couche étanche peu coûteuse et de fabrication simple.

Ainsi, la présente invention concerne notamment un procédé de fabrication d'une couche étanche entrant dans la composition d'un pneumatique **caractérisé en ce que** :
- on chauffe un film en matériau thermoplastique de telle manière que le film soit apte à se déformer plastiquement,
- on déforme le film à l'aide de moyens d'ondulation,
   l'épaisseur du film étant comprise dans un domaine allant de 0,01 à 0,2 mm, et le film comportant des ondulations de pas et d'amplitude choisis dans un domaine allant de 0,1 à 10 mm de manière à conférer au film une capacité d'allongement donnée,
- on refroidit le film de telle manière que le film ondulé ne soit plus apte à se déformer plastiquement,
- on enrobe le film ondulé dans une matrice en matériau élastomérique, de manière à former une couche étanche composite.

L'épaisseur et les ondulations du film lui confèrent une bonne déformabilité. L'épaisseur du film est choisie de manière à lui conférer une bonne flexibilité. Le pas et l'amplitude des ondulations sont choisis de manière à conférer au film une capacité d'allongement prédéterminée.

Le film ondulé se déforme par flexion locale au niveau d'une ondulation. En considérant le film ondulé dans son ensemble, une sollicitation par traction du film selon la direction des ondulations a pour effet un allongement du film ondulé.

La matrice élastomérique prévient les détériorations dudit film telles les déchirures, lors de la manipulation de la couche étanche ou lors de l'utilisation du pneumatique. La matrice absorbe également l'essentiel des sollicitations subies par la couche étanche, permettant ainsi d'éviter que des sollicitations excessives ne s'appliquent au film ondulé, et occasionnent des déchirures.

Ainsi, lorsque la couche étanche est sollicitée selon la direction des ondulations, lors d'une ou plusieurs étapes de fabrication d'un pneumatique, ou lorsque le pneumatique se déforme lors du roulage, la couche étanche est en mesure de s'allonger de façon très importante sans que le film ondulé se déforme plastiquement ou se détériore.

Enfin, la couche étanche forme une barrière continue apte à stopper la diffusion des gaz dans le pneumatique, et est obtenue de manière simple et peu coûteuse.

De préférence, la matrice comprend une première et une deuxième couche entre lesquelles le film ondulé est situé, chaque couche étant formée par une ou plusieurs nappes ou bandelettes en matériau élastomérique.

Avantageusement, les moyens d'ondulation comprennent des cannelures de telle manière que le film, chauffé et déposé sur les cannelures, en épouse les contours.

Selon une première variante de réalisation, les moyens d'ondulation comprennent une plaque de surface médiane sensiblement plane, supportant les cannelures.

Le procédé de fabrication d'une couche étanche composite est indépendant du procédé et des moyens usuels d'assemblage d'une ébauche de pneumatique, ce qui permet d'éviter la modification desdits moyens usuels.

Avantageusement, la plaque cannelée est monobloc en matériau élastomérique, et constitue la première couche de la matrice.

Ainsi, le film est ondulé directement sur une couche de la matrice. Le film ondulé s'en trouve renforcé et le risque de détériorations ultérieures lors de manipulations est réduit. De plus, le risque d'aplatissement du film ondulé lors d'un procédé de calandrage de la couche étanche composite est réduit.

Selon une seconde variante de réalisation, les moyens d'ondulation comprennent une ébauche de pneumatique en cours de fabrication, ladite ébauche comportant une surface radialement externe supportant les cannelures, ladite surface étant formée par une couche en matériau élastomérique constituant la première couche de la matrice.

Ainsi, les ondulations du film sont formées directement sur l'ébauche de pneumatique en cours de fabrication. Le film ondulé s'en trouve renforcé et le risque de détériorations ultérieures lors de manipulations est réduit. De plus, le risque d'aplatissement du film ondulé lors d'un procédé de rouletage de la couche étanche composite est réduit.

Par ailleurs, lors de la pose ou la conformation d'une couche étanche au moyen d'un tambour d'assemblage d'ébauche de pneumatique, ladite couche passe d'une forme plane à une forme cylindrique, et ensuite à une forme torique, ce qui a pour conséquence d'étirer ladite couche et de réduire sa capacité d'allongement.

Ainsi, selon la seconde variante de réalisation, la capacité d'allongement de la couche étanche est préservée.

Avantageusement, on dispose de la colle entre le film et la matrice afin d'assurer une bonne cohésion de la couche étanche composite.

De préférence, les cannelures ont un pas compris dans un domaine allant de 0,1 à 10 mm, de préférence, de 0,1 à 2 mm et, encore plus préférentiellement, de 0,4 à 0,8 mm, et une amplitude comprise dans un domaine allant de 0,1 à 10 mm, de préférence, de 0,1 à 2 mm et, encore plus préférentiellement, de 0,4 à 0,8 mm.

L'invention a également pour objet une couche étanche entrant dans la composition d'un pneumatique, comprenant un film en matériau thermoplastique, une matrice en matériau élastomérique, ledit film étant enrobé dans ladite matrice, la couche étanche composite étant caractérisée en ce que l'épaisseur du film est comprise dans un domaine allant de 0,01 à 0,2 mm, et en ce que le film comporte des ondulations de pas et d'amplitude choisis dans un domaine allant de 0,1 à 10 mm de manière à conférer au film une capacité d'allongement donnée.

De préférence, l'épaisseur de la couche étanche est comprise dans un domaine allant de 0,1 à 10 mm, de préférence, de 0,5 à 2 mm.

De préférence, les ondulations ont un pas compris dans un domaine allant de 0,1 à 2 mm et, de préférence, de 0,4 à 0,8 mm, et une amplitude comprise dans un domaine allant de 0,1 à 2 mm et, de préférence, de 0,4 à 0,8 mm.

Enfin, l'invention a pour objet un pneumatique **caractérisé en ce qu**'il comprend une couche étanche selon un des objets de l'invention.

De préférence, les ondulations s'étendent de telle manière que les directrices des ondulations forment un angle alpha avec une direction parallèle à la direction axiale du pneumatique et, de préférence, alpha est compris dans un domaine allant de 0 à 45° et, de préférence, de 0 à 20°.

Lors de son utilisation, le pneumatique se déforme selon plusieurs directions. La couche étanche, ainsi disposée, se déforme grâce aux ondulations selon les différentes directions du pneumatique, par exemple la direction radiale et la direction longitudinale.

L'invention sera mieux comprise grâce à la suite de la description, qui s'appuie sur les figures suivantes :
- la figure 1 est une vue en perspective d'un film ondulé entrant dans la composition d'une couche étanche composite selon l'invention ;
- les figures 2 et 3 sont des vues en coupe selon la direction des ondulations du film de la figure 1, respectivement à l'état repos et l'état tendu ;
- les figures 4 et 5 sont des vues en coupe radiale d'un pneumatique selon l'invention ;
- les figures 6 et 7 sont des vues, respectivement, de face et de coté de la couche étanche du pneumatique des figures 4 et 5 ;
- les figures 8, 9 et 10 sont des ordinogrammes illustrant plusieurs variantes d'un procédé de fabrication d'une couche étanche selon l'invention.

Sur les différentes figures, les éléments identiques ou similaires portent la même référence. Leur description n'est donc pas systématiquement reprise.

Une couche étanche 20 comprend un film ondulé 21 en matériau thermoplastique et une matrice 22 en matériau élastomérique. Ledit film est enrobé dans ladite matrice.

Par « enrobé dans la matrice », on entend l'état du film à l'issue de l'étape d'enrobage, ledit film étant enveloppé, de part et d'autre, de matériau élastomérique.

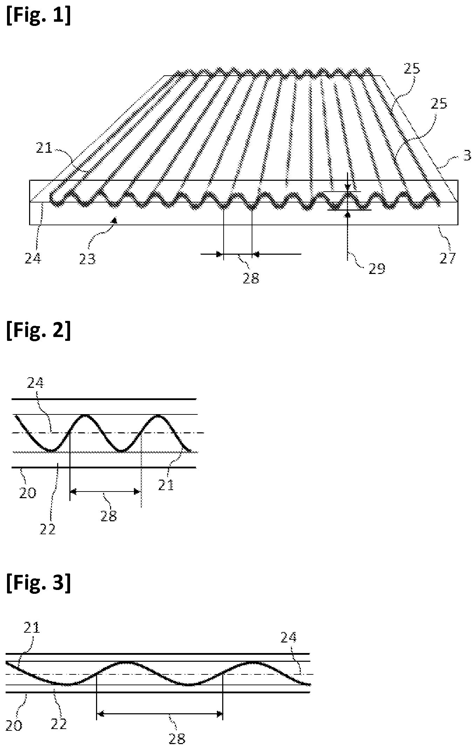

La figure 1 illustre un film ondulé 21 entrant dans la composition d'une couche étanche 20 selon l'invention. Le film comporte une série d'ondulations 23 consistant en une alternance de creux et de saillies de forme arrondie.

Dans une configuration simplifiée dans laquelle le film ondulé 21 est disposé sur une surface plane, les ondulations se propagent le long d'une direction appelée direction des ondulations 24, et s'étendent le long de génératrices 25 perpendiculaires à la direction des ondulations. Les génératrices du film ondulé sont rectilignes et parallèles entre elles.

Les ondulations 23 confèrent au film une déformabilité importante. Le film ondulé 21 se déforme par flexion locale du film au niveau d'une ondulation. En considérant le film ondulé dans son ensemble, une sollicitation par traction selon la direction des ondulations 24 dudit film a pour effet son allongement important.

La figure 2 illustre une section du film ondulé 21 selon un plan de coupe 26 perpendiculaire aux génératrices 25. Ladite section forme un profil 27 ondulé, continu et sans cassure. Par « profil sans cassure », on entend un profil dont le rayon de courbure est de préférence supérieur ou égal à 0,1 mm.

Le profil 27 ondulé du film est caractérisé par un pas 28 et une amplitude 29 qui correspondent respectivement à l'espacement séparant deux creux ou deux saillies selon la direction des ondulations 24, et à la distance séparant le sommet d'un creux et le sommet d'une saillie selon une direction perpendiculaire à la direction des ondulations.

Dans une configuration complexe dans laquelle le film ondulé 21 est disposé sur une surface non plane, tel un cylindre ou un tore, les génératrices 25 des ondulations 23 ne sont pas toujours rectilignes, mais sont séparées d'une distance sensiblement constante. Par « sensiblement constante », on entend que la distance espaçant les ondulations varie de plus ou moins 30%.

Le film ondulé 21 est en un matériau thermoplastique ce qui permet d'abaisser le coefficient de perméabilité ou, autrement dit, d'augmenter l'étanchéité de la couche étanche 20, tout en diminuant l'hystérèse.

Par « matériau thermoplastique », on entend un matériau qui se ramollit lorsqu'il est chauffé au-dessus d'une certaine température appelée « température de ramollissement », et qui, de manière réversible, redevient dur une fois refroidi en dessous de cette température.

De préférence, le film ondulé 21 comprend une pluralité de couches. Chaque couche est en un matériau thermoplastique pouvant être différent du matériau thermoplastique employé dans les autres couches du film ondulé.

De préférence, chaque matériau thermoplastique composant le film ondulé 21 présente les caractéristiques suivantes :
- sa température de fusion ou de ramollissement est supérieure à 100°C, préférentiellement supérieure à 140°C et très préférentiellement comprise entre 170 et 300°C ;
- sa perméabilité à l'air à 60°C est inférieure à 3.10-17 m4.N-1.s-1, préférentiellement inférieure à 5.10-18 m4.N-1.s-1 afin d'améliorer l'étanchéité de la composition élastomère étanche.

La température de ramollissement peut être mesurée, par exemple, selon la méthode décrite dans la norme ASTM D 1525. La perméabilité à l'air à 60°C peut être mesurée, par exemple, selon la méthode décrite ci-après.

Préférentiellement, chaque matériau thermoplastique est choisi dans le groupe constitué par les polyoléfines, les polymères vinyliques chlorés, les polystyrènes, les polyamides, les polyesters, les copolymères d'éthylène et d'alcool vinylique (EVOH), les polyacrylates, les polyacétals, et leurs mélanges.

De préférence, les polyoléfines sont choisies parmi les polyéthylènes et les polypropylènes.

De préférence, les polymères vinyliques chlorés sont choisis parmi les polychlorures de vinyle (PVC), les polychlorures de vinylidène (PVDC), les polychlorures de vinyle surchlorés (PVCC) et leurs mélanges.

De préférence, les polyesters sont choisis parmi les polyéthylènes téréphtalates (PET), les polybutylènes téréphtalates (PBT), les polycarbonates (PC) et les polyéthylènes naphtalates (PEN), et leurs mélanges.

Les polyamides peuvent être choisis parmi les polyamides aliphatiques et de préférence parmi les polyamides 6, les polyamides 6-6, les polyamides 11 et leurs mélanges.

Un exemple de polyacrylate est le polyméthylméthacrylate (PMMA) ; un exemple de polyacétal est le polyoxyde de méthylène (POM).

A titre d'exemples de matériaux thermoplastiques disponibles commercialement, notamment en ce qui concerne les polyamides, on peut citer par exemple le PA11 RILSAN d'Arkema, le PA12 GRILAMID de EVS-Grimory, le PA6 TROGAMID de Evonik, le PA12 ORGASOL d'Arkema. Ils ont par exemple été décrits, ainsi que leur synthèse, dans les documents Techniques de l'ingénieur, réf A3360 et 0702 polyamides PA, référence issue de « matériaux plastiques et composites » de B. Guerin. On peut également citer le PTFE, FEP, DVA ou le Pebax.

Le film ondulé 21 a une épaisseur comprise entre 0,01 et 0,2 mm, de préférence entre 0,04 et 0,12 mm. Au-delà de 0,12 mm, le film ondulé devient trop rigide et ne permet plus de conférer à la couche étanche composite une déformabilité ou flexibilité satisfaisante. En dessous de 0,04 mm, le risque de détériorer le film ondulé lors de sa manipulation devient trop important. L'épaisseur du film peut être mesurée simplement à l'aide d'un microscope optique.

La matrice 22 élastomérique enrobe le film ondulé 21 de manière à former une couche étanche composite 20.

Dans la suite de la description, on utilisera indifféremment les expressions « couche étanche » ou « couche étanche composite ».

La matrice 22 prévient les détériorations dudit film telles les déchirures, lors de la manipulation de la couche étanche ou lors du fonctionnement du pneumatique. La matrice absorbe également l'essentiel des sollicitations subies par la couche étanche 20, permettant ainsi d'éviter que des sollicitations excessives ne s'appliquent au film ondulé 21, et occasionnent des déchirures.

La matrice 22 comprend une première et une deuxième couche entre lesquelles le film ondulé est situé, chaque couche étant formée d'une ou plusieurs nappes ou bandelettes en matériau élastomérique.

Chaque couche de la matrice 22 est en un matériau élastomérique pouvant être différent du matériau élastomérique employé dans l'autre couche de la matrice.

Préférentiellement, chaque matériau élastomérique comporte au moins un élastomère choisi parmi les élastomères diéniques, les élastomères thermoplastiques styréniques (TPS) qui font partie de la famille des élastomères thermoplastiques (TPE), et leurs mélanges.

L'élastomère diénique est, de préférence, choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Chaque matériau élastomérique peut comprendre une huile d'extension de l'élastomère dont la fonction est de faciliter la mise en oeuvre de la couche étanche composite, particulièrement son intégration dans l'objet pneumatique par un abaissement du module et une augmentation du pouvoir tackifiant.

Chaque matériau élastomérique peut comprendre au moins une charge choisie parmi les charges renforçantes telles que du noir de carbone ou de la silice, des charges non renforçantes ou inertes.

Le film ondulé 21 peut être adhérisé, c'est-à-dire traité de manière à améliorer son adhésion à la matrice de la couche étanche. Par exemples, le film ondulé peut être adhérisé avec une colle choisie parmi les colles époxy suivie d'un traitement au latex résorcinol-formaldéhyde (RFL) liquide et les colles à base de formaldéhyde, de préférences les colles RFL. A titre d'exemple de colle RFL utilisable pour adhériser le film ondulé en matériau thermoplastique, on peut citer celles décrites dans la demande WO 2001/057116.

Selon l'invention, le film 21 comporte des ondulations 23 présentant des caractéristiques de formes prédéterminées.

Les ondulations 23 confèrent au film 21 une déformabilité importante. Le film ondulé se déforme par flexion locale du film au niveau d'une ondulation. En considérant le film ondulé dans son ensemble, une sollicitation par traction du film selon la direction des ondulations 24 a pour effet un allongement important du film ondulé.

Lorsque la couche étanche est sollicitée selon la direction des ondulations 24, lors d'une ou plusieurs étapes de fabrication d'un pneumatique, ou lorsque le pneumatique se déforme lors du roulage, la couche étanche 20 est en mesure de s'allonger de façon très importante sans que le film ondulé se déforme plastiquement ou se détériore.

Enfin, la couche étanche forme une barrière continue apte à stopper la diffusion des gaz dans le pneumatique, et est obtenue de manière simple et peu coûteuse.

La couche étanche composite 20 selon l'invention entre dans la composition d'un pneumatique 30.

A titre d'exemple, la couche étanche composite 20 décrite dans la présente demande est utilisable comme couche étanche aux gaz, notamment à l'air et à l'azote, dans tout type d'objets pneumatiques tels les bateaux pneumatiques.

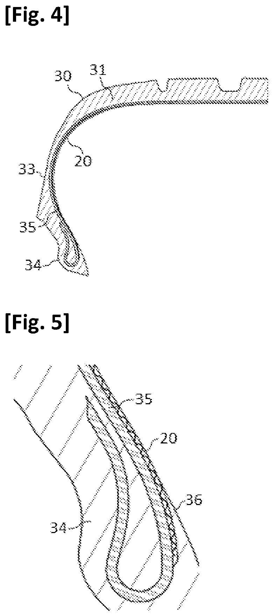

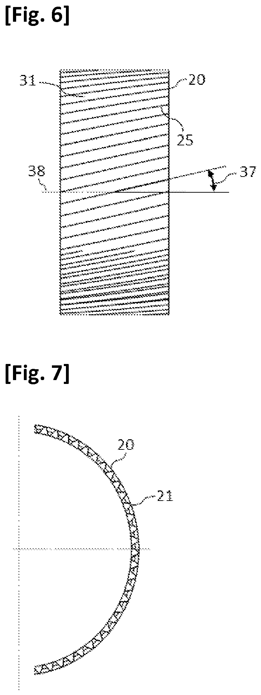

La figure 5 et la figure 6 sont des vues en coupe radiale d'un pneumatique 30 selon l'invention. Par coupe radiale, on entend une coupe selon un plan contenant l'axe de rotation du pneumatique appelé plan radial. Une direction contenue dans un plan radial et intersectant l'axe de rotation, est appelée direction radiale. Par plan circonférentiel, on entend un plan perpendiculaire à l'axe de rotation du pneumatique. Une direction circulant à une distance donnée autour de l'axe de rotation, et perpendiculaire à une direction radiale et à l'axe de rotation, est appelée direction circonférentielle. Une direction parallèle à la direction de roulage est appelée direction longitudinale.

Le pneumatique 30 comporte un sommet 31 renforcé par une armature de sommet ou ceinture, deux flancs 32 et deux bourrelets 34, chacun de ces bourrelets 34 étant renforcé avec une tringle. Le sommet est surmonté d'une bande de roulement. Une armature de carcasse est enroulée autour des deux tringles dans chaque bourrelet, le retournement de cette armature étant par exemple disposé vers l'extérieur du pneumatique. L'armature de carcasse 35 est de manière connue en soi constituée d'au moins une nappe renforcée par des câbles dits « radiaux », par exemple textiles ou métalliques, c'est-à-dire que ces câbles sont disposés sensiblement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets et passe par le milieu de l'armature de sommet.

La paroi intérieure 36 du pneumatique comporte une couche étanche composite 20. La couche étanche couvre toute la paroi intérieure du pneumatique, se prolongeant d'un flanc 32 à l'autre, au moins jusqu'au niveau du crochet de jante lorsque le pneumatique 30 est en position montée. Elle définit la face radialement intérieure dudit pneumatique destinée à protéger l'armature de carcasse 35 de la diffusion d'air provenant de l'espace intérieur au pneumatique. Elle permet le gonflement et le maintien sous pression du pneumatique; ses propriétés d'étanchéité doivent lui permettre de garantir un taux de perte de pression relativement faible, de maintenir le pneumatique gonflé, en état de fonctionnement normal, pendant une durée suffisante, normalement de plusieurs semaines ou plusieurs mois.

A titre d'exemple, une telle couche étanche composite 20 peut être également intégrée complètement à la structure interne du pneumatique 30.

L'épaisseur de la couche étanche composite 20 est préférentiellement supérieure à 0,05 mm, plus préférentiellement comprise entre 0,1 mm et 10 mm, préférentiellement encore entre 0,5 et 2 mm. L'homme du métier saura adapter l'amplitude des ondulations du film en fonction de l'épaisseur de la couche étanche composite.

Ainsi par exemple, pour des pneumatiques 30 de type tourisme, elle peut avoir une épaisseur d'au moins 0,05 mm, préférentiellement comprise entre 0,5 et 2 mm. Selon un autre exemple, pour des pneumatiques de véhicules poids lourds ou agricole, l'épaisseur préférentielle peut se situer entre 1 et 3 mm. Selon un autre exemple, pour des pneumatiques de véhicules dans le domaine du génie civil ou pour avions, l'épaisseur préférentielle peut se situer entre 1 et 10 mm.

On comprendra aisément que, selon les domaines d'application spécifiques, les dimensions et les pressions en jeu, le mode de mise en oeuvre de l'invention peut varier, la couche étanche composite 20 comportant alors plusieurs gammes d'épaisseur préférentielles.

Avantageusement, le rapport de l'épaisseur de la couche étanche composite 20 sur l'amplitude 29 des ondulations 23 du film ondulé 21 au sein de ladite couche est compris dans un domaine allant de 1 à 10 et, de préférence, de 1,2 à 2.

Comparativement à une couche étanche 20 à l'air usuelle à base de caoutchouc butyl, la couche étanche composite selon l'invention a l'avantage de présenter non seulement une hystérèse plus faible, et donc d'offrir une résistance au roulement réduite aux pneumatiques, mais encore une étanchéité largement améliorée tout en ayant une bonne déformabilité.

Les caractéristiques de forme des ondulations 23 du film ondulé 21, dans la couche étanche composite 20, sont prédéterminées de manière à obtenir une capacité d'allongement souhaitée du film ondulé et, par conséquent, à conférer une bonne déformabilité à la couche étanche composite.

On définit la capacité d'allongement du film ondulé 21 comme le rapport entre la développée de l'ondulation 23, tendue jusqu'à atteindre un profil rectiligne, et le pas 28 de l'ondulation au repos ou préalablement à tout allongement du film ondulé.

Pour obtenir un film présentant une capacité d'allongement donnée, on choisit le pas et l'amplitude des ondulations dans un domaine compris entre 0,1 et 10 mm. A titre d'exemple, pour obtenir une capacité d'allongement d'environ 230% du film, le pas et l'amplitude choisis sont égaux. Pour obtenir une capacité d'allongement d'environ 267% du film, l'amplitude est égale à 120% du pas. Pour obtenir une capacité d'allongement d'environ 178% du film, l'amplitude est égale à 70% du pas.

La capacité d'allongement souhaitée est fonction des déformations rencontrées par l'ébauche de pneumatique (lors de la fabrication), lors d'un procédé d'assemblage d'une ébauche de pneumatique ou lors d'un procédé de vulcanisation de ladite ébauche, et des déformations rencontrées par le pneumatique 30 au cours de son utilisation (lors du roulage).

De préférence, les directrices 25 des ondulations 23 forment, préférentiellement au sommet 31 du pneumatique 30, un angle alpha 37 avec une direction parallèle à la direction axiale 38 (axe de rotation) du pneumatique 30, et alpha est compris dans un domaine allant de 0 à 45° et, de préférence, de 0 à 20° (figure 6, figure 7).

Au-delà de 20°, la capacité d'allongement résiduelle de la couche étanche 20, après conformation, est insuffisante et ne permet plus à la couche étanche d'absorber les sollicitations lors du roulage.

De préférence, le ratio de l'amplitude 29 et du pas 28 des ondulations 23, lors de la réalisation de la couche étanche 20, est compris dans un domaine allant de 0,5 à 2. En deçà de 0,5, la capacité d'allongement ou l'épaisseur de la couche étanche 20 ne sont pas optimisées, et au-delà de 2, il devient difficile de faire pénétrer le matériau élastomérique de la matrice 22 dans les creux et les saillies des ondulations.

Les ondulations 23 ont un pas compris dans un domaine allant de 0,1 à 10 mm, de préférence, de 0,1 à 2 mm et, encore plus préférentiellement, de 0,4 à 0,8 mm, et une amplitude 29 comprise dans un domaine allant de 0,1 à 10 mm, de préférence, de 0,1 à 2 mm et, encore plus préférentiellement, de 0,4 à 0,8 mm.

A titre d'exemple, lors d'un procédé d'assemblage d'une ébauche de pneumatique, une couche étanche 20 selon l'invention peut être disposée sur un tambour de fabrication d'une ébauche de pneumatique de forme cylindrique. L'ébauche de pneumatique en forme de cylindre est ensuite conformée de manière à lui conférer une forme de tore. Le sommet 31 de l'ébauche de pneumatique s'allonge ainsi jusqu'à 90% de sa longueur initiale.

Selon une première variante de réalisation, les directrices 25 des ondulations 23 sont contenues dans un plan circonférentiel. Ainsi, la couche étanche composite 20 peut s'allonger lors de l'étape de conformation du procédé d'assemblage d'une ébauche de pneumatique. La couche étanche composite peut également s'allonger lors de l'utilisation du pneumatique 30 sans solliciter le film ondulé 21 et ainsi, garantir son endurance.

Selon une seconde variante de réalisation, les directrices 25 des ondulations 23 sont contenues dans un plan radial du pneumatique 30. Ainsi, la couche étanche composite 20 peut s'allonger, lors de l'étape de conformation du procédé d'assemblage d'une ébauche de pneumatique, tout en minimisant les sollicitations film ondulé 20 selon la direction des directrices 25. La couche étanche composite peut également s'allonger lors de l'utilisation du pneumatique, notamment lors d'un comportement appelé déradialisation du pneumatique durant lequel les câbles de renfort de la nappe carcasse ne sont plus radiaux relativement au pneumatique.

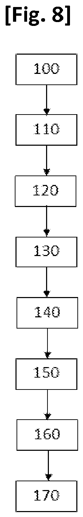

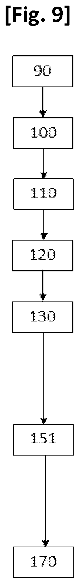

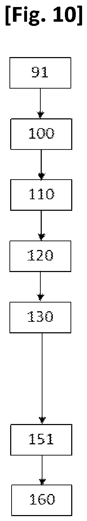

La figure 8, la figure 9 et la figure 10 sont des ordinogrammes des étapes illustrant plusieurs variantes de procédé de fabrication d'une couche étanche composite selon l'invention.

Tout d'abord, on dispose à l'étape 100 un film en matériau thermoplastique de forme sensiblement plane sur des moyens d'ondulation (non représenté).

A titre d'exemples, le film peut être disposé sur les moyens d'ondulation manuellement, automatiquement à l'aide d'un applicateur, ou encore, à l'aide de moyens de projection, de soufflage et/ou d'aspiration.

On chauffe à l'étape 110 le film en matériau thermoplastique de telle manière que le film soit apte à se déformer plastiquement. L'étape de chauffage peut être initiée en tout moment opportun, pendant ou après la dépose du film thermoplastique sur les moyens d'ondulations. L'étape de chauffage n'affecte pas la cohérence interne du film, notamment lorsque le film est multicouche.

A titre d'exemples, le matériau thermoplastique peut également couvrir à l'état fondu (liquide) les moyens d'ondulation, de telle manière que le film soit formé lors du refroidissement du matériau thermoplastique au contact des moyens d'ondulation. Le film peut également être chauffé uniquement lors de la vulcanisation de l'ébauche de pneumatique, sous réserve que la matrice en matériau élastomérique constitue les moyens d'ondulations.

Le film est chauffé par tout moyen approprié, par exemple, par des moyens de chauffage par air pulsé, par rayonnement infrarouge, ou par échange de chaleur avec une résistance ou avec les moyens d'ondulations.

Sous l'effet des moyens de chauffage, le film passe à l'état fondu en raison de sa nature thermoplastique, et peut être travaillé. Ainsi, on forme à l'étape 120 sur le film des ondulations présentant des caractéristiques de formes prédéterminées à l'aide de moyens d'ondulation.

Les moyens d'ondulations comprennent des cannelures de telle manière que le film chauffé et déposé sur les cannelures en épouse les contours. Les cannelures des moyens d'ondulation constituent ainsi l'empreinte de moyens de moulage.

A titre d'exemple, les ondulations peuvent également être obtenues par des moyens de compression et/ou friction. Ainsi, le film peut être laminé par un rouleau sur une couche au comportement élastique de manière à induire des plissements sur la surface du film.

**De** préférence, les cannelures ont un pas compris dans un domaine allant de 0,1 à 10 mm, de préférence, de 0,1 à 2 mm et, encore plus préférentiellement, de 0,4 à 0,8 mm, et une amplitude comprise dans un domaine allant de 0,1 à 10 mm, de préférence, de 0,1 à 2 mm et, encore plus préférentiellement, de 0,4 à 0,8 mm.

**De** préférence, les moyens d'ondulation comprennent une plaque de surface médiane sensiblement plane, supportant les cannelures. La plaque est réalisée dans un matériau rigide tel l'acier, l'aluminium ou la résine.

A titre d'exemple, les moyens d'ondulation peuvent également comprendre un rouleau cannelé, le film défilant au contact dudit rouleau, le rouleau étant apte à laminer le film et y mouler ou imprimer la forme des cannelures.

La plaque cannelée rentre dans la composition des moyens de mise en oeuvre d'un procédé de fabrication d'une couche étanche composite. Ledit procédé est indépendant du procédé et des moyens usuels d'assemblage d'une ébauche de pneumatique, ce qui permet d'éviter la modification desdits moyens usuels.

Selon une première variante de réalisation des moyens d'ondulation, la plaque cannelée est monobloc en matériau élastomérique, et constitue la première couche de la matrice. Autrement dit, on réalise à l'étape 90 préalablement une couche cannelée en matériau élastomérique à l'aide de moyens d'ondulation, tel une plaque ou un rouleau cannelé.

Ainsi, le film est ondulé directement sur une partie de la matrice 22. Le film ondulé 21 s'en trouve renforcé et le risque de détériorations ultérieures lors de manipulations est réduit. De plus, le risque d'aplatissement du film ondulé lors d'un procédé de calandrage de la couche étanche composite 20 est réduit.

Selon une deuxième variante de réalisation des moyens d'ondulation, les moyens d'ondulation comprennent une ébauche de pneumatique en cours de fabrication, ladite ébauche comportant une surface radialement externe supportant les cannelures, ladite surface étant formée par une couche en matériau élastomérique constituant la première couche de la matrice. Autrement dit, on réalise à l'étape 91 préalablement une couche cannelée en matériau élastomérique à l'aide de moyens d'assemblage d'une ébauche de pneumatique, tel un noyau d'assemblage d'ébauche de pneumatique.

De préférence, les cannelures de la surface radialement externe sont formées par l'application et l'empilage (le tuilage) d'une bandelette en matériau élastomérique.

A titre d'exemple, les cannelures de la surface radialement externe peuvent également être obtenues par des moyens de moulage ou par des moyens de striage.

Ainsi, les ondulations 23 du film sont formées directement sur l'ébauche de pneumatique en cours de fabrication. Le film ondulé 21 s'en trouve renforcé et le risque de détériorations ultérieures lors de manipulations est réduit. De plus, le risque d'aplatissement du film ondulé lors d'un procédé de rouletage de la couche étanche composite 20 est réduit.

Par ailleurs, lors de la pose ou la conformation d'une couche étanche au moyen d'un tambour d'assemblage d'ébauche de pneumatique, ladite couche passe d'une forme plane ou cylindrique, à une forme cylindrique ou torique, ce qui a pour conséquence d'étirer ladite couche et de réduire sa capacité d'allongement.

Ainsi, selon la deuxième variante de réalisation des moyens d'ondulation, la capacité d'allongement de la couche étanche 20 est préservée.

On refroidit à l'étape 130 le film de telle manière que le film ondulé 21 ne soit plus apte à se déformer plastiquement.

Le film est refroidi par tout moyen approprié, par exemple, par des moyens de refroidissement par air pulsé, par liquide, ou par contact avec les moyens d'ondulations.

On enrobe aux étapes 150, 151 ensuite le film ondulé dans une matrice en matériau élastomérique. L'enrobage du film ondulé peut être obtenu de différente manière.

Selon une première variante de réalisation de l'enrobage, on démoule à l'étape 140 le film des moyens d'ondulation, notamment lorsque les moyens d'ondulation comprennent une plaque supportant les cannelures. Ensuite, on dispose à l'étape 150 le film entre deux fines couches planes en matériau élastomérique, généralement appelées « skim ».

De préférence, les deux fines couches en matériau élastomérique sont cannelées de manière à faciliter l'enrobage du film ondulé.

Selon une deuxième variante de réalisation de l'enrobage, le film ondulé demeure sur les moyens d'ondulation, notamment lorsque les moyens d'ondulation comprennent une plaque cannelée monobloc en matériau élastomérique ou, autrement dit, un skim cannelé, et constitue la première couche de la matrice. On dispose 151 ensuite un skim plan ou, de préférence, cannelé de manière à former la seconde couche de la matrice.

Selon une troisième variante de réalisation de l'enrobage, le film ondulé 21 demeure sur les moyens d'ondulation, notamment lorsque les moyens d'ondulation comprennent une ébauche de pneumatique en cours d'assemblage, ladite ébauche comportant une surface radialement externe supportant les cannelures, ladite surface étant formée par une couche en matériau élastomérique constituant la première couche de la matrice. On dispose 151 ensuite un skim plan ou, de préférence, cannelé de manière à former la seconde couche de la matrice.

Optionnellement, on dispose de la colle entre le film et la matrice ; à tout moment opportun avant ou pendant l'étape d'enrobage.

Optionnellement, on calendre 160 la couche étanche composite 20 de manière à obtenir une couche étanche d'épaisseur donnée. Les moyens de calandrage comprennent, pour la première et la deuxième variante de réalisation de l'enrobage, deux rouleaux entre lesquels la couche étanche composite est laminée et, pour la troisième variante de réalisation de l'enrobage, un rouleau appliqué avec pression sur la surface radialement externe de l'ébauche de pneumatique. On obtient ainsi une couche étanche d'épaisseur donnée.

Pour la première et la deuxième variante de réalisation de l'enrobage, on intègre à l'étape 170 la couche étanche composite 20 dans une ébauche de pneumatique.

Une variante de fabrication avantageuse consistera, par exemple au cours d'une première étape, à déposer à plat la couche étanche composite 20 directement sur un tambour de fabrication d'ébauche de pneumatique, sous la forme d'une couche d'épaisseur donnée, avant de recouvrir cette dernière avec le reste de la structure de l'ébauche de pneumatique, selon des techniques de fabrication bien connues de l'homme du métier.

**Le** pneumatique 30 pourvu de la couche étanche composite 20 peut être réalisé avant ou après vulcanisation (ou cuisson).

Dans le premier cas (i.e., avant cuisson du pneumatique), la couche étanche composite est simplement appliquée de façon conventionnelle à l'endroit souhaité, pour formation de la couche. La vulcanisation est ensuite effectuée classiquement.

Dans le second cas (i.e. après cuisson du pneumatique), la couche étanche est appliquée à l'intérieur du pneumatique cuit par tout moyen approprié, par exemple par collage.

D'autres variantes et modes de réalisation de l'invention peuvent être envisagés sans sortir du cadre de ses revendications.

## Revendications

1. Procédé de fabrication d'une couche étanche composite (20) entrant dans la composition d'un pneumatique **caractérisé en ce que** :
- on chauffe (110) un film (21) en matériau thermoplastique de telle manière que le film soit apte à se déformer plastiquement,
- on déforme (120) le film à l'aide de moyens d'ondulation,
l'épaisseur du film (21) étant comprise dans un domaine allant de 0,01 à 0,2 mm, et le film comportant des ondulations de pas et d'amplitude choisis dans un domaine allant de 0,1 à 10 mm de manière à conférer au film une capacité d'allongement donnée,
- on refroidit (130) le film de telle manière que le film ondulé ne soit plus apte à se déformer plastiquement,
- on enrobe (150) le film ondulé dans une matrice (22) en matériau élastomérique, de manière à former une couche étanche composite (20).

2. Procédé selon la revendication précédente, dans lequel la matrice (22) comprend une première et une deuxième couche entre lesquelles le film ondulé (21) est situé, chaque couche étant formée d'une ou plusieurs nappes ou bandelettes en matériau élastomérique.

3. Procédé selon l'une des revendications précédentes, dans lequel les moyens d'ondulations comprennent des cannelures de telle manière que le film (21) chauffé et déposé sur les cannelures en épouse les contours.

4. Procédé selon la revendication 3, dans lequel les moyens d'ondulation comprennent une plaque de surface médiane sensiblement plane, supportant les cannelures.

5. Procédé selon la revendication 4, dans lequel la plaque cannelée est monobloc en matériau élastomérique, et constitue la première couche de la matrice (22).

6. Procédé selon la revendication 3, dans lequel les moyens d'ondulation comprennent une ébauche de pneumatique en cours d'assemblage, ladite ébauche comportant une surface radialement externe supportant les cannelures, ladite surface étant formée par une couche en matériau élastomérique constituant la première couche de la matrice (22).

7. Procédé selon l'une des revendications précédentes, dans lequel on dispose de la colle entre le film (21) et la matrice (22).

8. Procédé selon l'une des revendications précédentes, dans lequel on calendre la couche étanche (20) à l'aide de moyens de calandrage.

9. Procédé selon la revendication précédente dans lequel les cannelures ont un pas compris dans un domaine allant de 0,1 à 10 mm, de préférence, de 0,1 à 2 mm et, encore plus préférentiellement, de 0,4 à 0,8 mm, et une amplitude comprise dans un domaine allant de 0,1 à 10 mm, de préférence, de 0,1 à 2 mm et, encore plus préférentiellement, de 0,4 à 0,8 mm.

10. Couche étanche (20) entrant dans la composition d'un pneumatique (30), comprenant un film (21) en matériau thermoplastique, une matrice (22) en matériau élastomérique, ledit film étant enrobé dans ladite matrice, la couche étanche composite étant **caractérisée en ce que** l'épaisseur du film (21) est comprise dans un domaine allant de 0,01 à 0,2 mm, et **en ce que** le film comporte des ondulations (23) de pas et d'amplitude choisis dans un domaine allant de 0,1 à 10 mm de manière à conférer au film une capacité d'allongement donnée.

11. Couche étanche (20) selon la revendication précédente, dans laquelle l'épaisseur du film (21) est comprise dans un domaine allant de 0,04 à 0,12 mm.

12. Couche étanche (20) selon l'une des revendications 10 à 11, dont l'épaisseur est comprise dans un domaine allant de 0,1 à 10 mm, de préférence, de 0,5 et 2 mm.

13. Couche étanche (20) selon l'une des revendications 10 à 12 dans laquelle les ondulations (23) ont un pas (28) compris dans un domaine allant de 0,1 à 2 mm et, de préférence, de 0,4 à 0,8 mm, et une amplitude (29) comprise dans un domaine allant de 0,1 à 2 mm et, de préférence, de 0,4 à 0,8 mm.

14. Pneumatique (30) **caractérisé en ce qu'**il comprend une couche étanche (20) selon l'une des revendications 10 à 13.

15. Pneumatique (30) selon la revendication précédente, dans lequel les ondulations (23) s'étendent de telle manière que les directrices (25) des ondulations forment un angle alpha (37) avec une direction parallèle à la direction axiale (38) du pneumatique, et alpha est compris dans un domaine allant de 0 à 45° et, de préférence, de 0 à 20°.

## Patentansprüche

1. Verfahren zur Herstellung einer dichten Verbundschicht (20), die in die Zusammensetzung eines Reifens eingeht, **dadurch gekennzeichnet, dass**:
- man eine Folie (21) aus thermoplastischem Material so erhitzt (110), dass die Folie in der Lage ist, sich plastisch zu verformen,
- man die Folie (120) mithilfe von Wellungsmitteln verformt,
wobei die Dicke der Folie (21) in einem Bereich von 0,01 bis 0,2 mm liegt und wobei die Folie Wellungen mit einer Schrittweite und einer Amplitude umfasst, die in einem Bereich von 0,1 bis 10 mm gewählt sind, so dass der Folie ein gegebenes Dehnungsvermögen verliehen wird,
- man die Folie so abkühlt (130), dass die gewellte Folie nicht mehr in der Lage ist, sich plastisch zu verformen,
- man die gewellte Folie in eine Matrix (22) aus elastomerem Material einbettet (150), so dass eine dichte Verbundschicht (20) gebildet wird.

2. Verfahren nach dem vorhergehenden Anspruch, bei dem die Matrix (22) eine erste und eine zweite Schicht umfasst, zwischen denen sich die gewellte Folie (21) befindet, wobei jede Schicht aus einer oder mehreren Lagen oder Streifen aus elastomerem Material gebildet wird.

3. Verfahren nach einem der vorhergehenden Ansprüche, bei dem die Wellungsmittel Riffelungen umfassen, so dass sich die erhitzte und auf die Riffelungen aufgelegte Folie (21) an ihre Konturen anlegt.

4. Verfahren nach Anspruch 3, bei dem die Wellungsmittel eine Platte mit im Wesentlichen planer medianer Fläche umfassen, die die Riffelungen stützt.

5. Verfahren nach Anspruch 4, bei dem die geriffelte Platte einstückig aus elastomerem Material ist und die erste Schicht der Matrix (22) darstellt.

6. Verfahren nach Anspruch 3, bei dem die Wellungsmittel einen im Aufbau befindlichen Reifenrohling umfassen, wobei der Rohling eine radial äußere Fläche beinhaltet, die die Riffelungen trägt, wobei die Fläche durch eine Schicht aus elastomerem Material gebildet wird, die die erste Schicht der Matrix (22) darstellt.

7. Verfahren nach einem der vorhergehenden Ansprüche, bei dem Klebstoff zwischen der Folie (21) und der Matrix (22) angeordnet wird.

8. Verfahren nach einem der vorhergehenden Ansprüche, bei dem man die dichte Schicht (20) mithilfe von Kalandriermitteln kalandriert.

9. Verfahren nach dem vorhergehenden Anspruch, bei dem die Riffelungen eine Schrittweite haben, die in einem Bereich von 0,1 bis 10 mm, bevorzugt von 0,1 bis 2 mm und noch bevorzugter von 0,4 bis 0,8 mm liegt, und eine Amplitude, die in einem Bereich von 0,1 bis 10 mm, bevorzugt von 0,1 bis 2 mm und noch bevorzugter von 0,4 bis 0,8 mm liegt.

10. Dichte Schicht (20), die in die Zusammensetzung eines Reifens (30) eingeht, umfassend eine Folie (21) aus thermoplastischem Material, eine Matrix (22) aus elastomerem Material, wobei die Folie in die Matrix eingebettet ist, wobei die dichte Verbundschicht **dadurch gekennzeichnet ist, dass** die Dicke der Folie (21) in einem Bereich von 0,01 bis 0,2 mm liegt, und dadurch, dass die Folie Wellungen (23) mit einer Schrittweite und Amplitude beinhaltet, die in einem Bereich von 0,1 bis 10 mm gewählt sind, so dass der Folie ein gegebenes Dehnungsvermögen verliehen wird.

11. Dichte Schicht (20) nach dem vorhergehenden Anspruch, bei der die Dicke der Folie (21) in einem Bereich von 0,04 bis 0,12 mm liegt.

12. Dichte Schicht (20) nach einem der Ansprüche 10 bis 11, deren Dicke in einem Bereich von 0,1 bis 10 mm, bevorzugt von 0,5 bis 2 mm liegt.

13. Dichte Schicht (20) nach einem der Ansprüche 10 bis 12, bei der die Wellungen (23) eine Schrittweite (28) haben, die in einem Bereich von 0,1 bis 2 mm und bevorzugt von 0,4 bis 0,8 mm liegt, und eine Amplitude (29), die in einem Bereich von 0,1 bis 2 mm und bevorzugt von 0,4 bis 0,8 mm liegt.

14. Reifen (30), **dadurch gekennzeichnet, dass** er eine dichte Schicht (20) nach einem der Ansprüche 10 bis 13 umfasst.

15. Reifen (30) nach dem vorhergehenden Anspruch, bei dem sich die Wellungen (23) so erstrecken, dass die Leitlinien (25) der Wellungen einen Winkel Alpha (37) mit einer Richtung parallel zur axialen Richtung (38) des Reifens bilden, und Alpha in einem Bereich von 0 bis 45° und bevorzugt von 0 bis 20° liegt.

## Claims

1. Method for manufacturing a composite airtight layer (20) used in the composition of a tyre, **characterized in that**:
- a film (21) made of thermoplastic material is heated (110) such that the film is able to plastically deform,
- the film is deformed (120) with the aid of corrugating means,
the thickness of the film (21) being in a range from 0.01 to 0.2 mm, and the film having corrugations with a pitch and amplitude chosen in a range from 0.1 to 10 mm so as to give the film a given elongation capacity,
- the film is cooled (130) such that the corrugated film is no longer able to be plastically deformed,
- the corrugated film is coated (150) in a matrix (22) of elastomer material, so as to form a composite airtight layer (20).

2. Method according to the preceding claim, wherein the matrix (22) comprises a first and a second layer between which the corrugated film (21) is situated, each layer being formed of one or more plies or strips of elastomer material.

3. Method according to one of the preceding claims, wherein the corrugating means comprise grooves such that the heated film (21) deposited on the grooves conforms to the contours thereof.

4. Method according to Claim 3, wherein the corrugating means comprise a substantially flat central surface plate bearing the grooves.

5. Method according to Claim 4, wherein the grooved plate is made in one piece of elastomer material and forms the first layer of the matrix (22).

6. Method according to Claim 3, wherein the corrugating means comprise a green tyre in the course of being built, said green tyre having a radially external surface bearing the grooves, said surface being formed by a layer of elastomer material forming the first layer of the matrix (22).

7. Method according to one of the preceding claims, wherein adhesive is disposed between the film (21) and the matrix (22).

8. Method according to one of the preceding claims, wherein the airtight layer (20) is calendered (20) with the aid of calendering means.

9. Method according to the preceding claim, wherein the grooves have a pitch in a range from 0.1 to 10 mm, preferably from 0.1 to 2 mm and even more preferably from 0.4 to 0.8 mm, and an amplitude in a range from 0.1 to 10 mm, preferably from 0.1 to 2 mm and even more preferably from 0.4 to 0.8 mm.

10. Airtight layer (20) used in the composition of a tyre (30), comprising a film (21) made of thermoplastic material and a matrix (22) made of elastomer material, said film being coated in said matrix, the composite airtight layer being **characterized in that** the thickness of the film (21) is in a range from 0.01 to 0.2 mm, and **in that** the film has corrugations (23) with a pitch and amplitude chosen in a range from 0.1 to 10 mm so as to give the film a given elongation capacity.

11. Airtight layer (20) according to the preceding claim, wherein the thickness of the film (21) is in a range from 0.04 to 0.12 mm.

12. Airtight layer (20) according to either of Claims 10 and 11, the thickness of which is in a range from 0.1 to 10 mm, preferably from 0.5 to 2 mm.

13. Airtight layer (20) according to one of Claims 10 to 12, wherein the corrugations (23) have a pitch (28) in a range from 0.1 to 2 mm, and preferably from 0.4 to 0.8 mm, and an amplitude (29) in a range from 0.1 to 2 mm, and preferably from 0.4 to 0.8 mm.

14. Tyre (30), **characterized in that** it comprises an airtight layer (20) according to one of Claims 10 to 13.

15. Tyre (30) according to the preceding claim, wherein the corrugations (23) extend in such a way that the directrices (25) of the corrugations form an angle alpha (37) with a direction parallel to the axial direction (38) of the tyre, and alpha is in a range from 0 to 45°, and preferably from 0 to 20°.
